# EUROPÄISCHE PATENTSCHRIFT

(11) **EP 2 367 750 B1**
(45) Veröffentlichungstag und Bekanntmachung des Hinweises auf die Patenterteilung: **10.05.2017**
(21) Anmeldenummer: 09807435.4
(22) Anmeldetag: 09.12.2009
(51) Int. Cl.: C01B 3/26, C01B 3/00, B01J 37/02, B01J 23/42, B01J 8/00, B01J 8/02, B01J 35/00, B01J 35/02

(54) **VERFAHREN ZUM ERZEUGEN VON WASSERSTOFF SOWIE SCHÜTTKÖRPER ZUR VERWENDUNG IN EINER ANLAGE ZUR DURCHFUHRUNG DIESES VERFAHRENS**
METHOD FOR GENERATING HYDROGEN AND POURABLE BODIES FOR USE IN A SYSTEM FOR CARRYING OUT SAID METHOD
PROCÉDÉ DE PRODUCTION D'HYDROGÈNE,ET CORPS EN VRAC DESTINÉS À ÊTRE UTILISÉS DANS UNE INSTALLATION POUR LA MISE EN OEUVRE DE CE PROCEDE

(30) Priorität: 16.12.2008 DE 102008062662
(43) Veröffentlichungstag der Anmeldung: 28.09.2011
(73) Patentinhaber: H2 GmbH, 79219 Staufen im Breisgau (DE)
(72) Erfinder: HALBEDEL, Bernd, 98693 Ilmenau (DE); OCHMANN, Clemens, 04249 Leipzig (DE); KRAUS, Hans-Jürgen, 79219 Staufen (DE)
(74) Vertreter: Pfeiffer, Rolf-Gerd
(86) Internationale Anmeldenummer: PCT/DE2009/001742
(87) Internationale Veröffentlichungsnummer: WO 2010/075835

(56) Entgegenhaltungen:
- WO-A1-98/38655
- WO-A1-02/098562
- WO-A1-2005/046868
- WO-A1-2007/034737
- WO-A2-2004/053175
- DE-A1-102005 039 175
- GB-A- 1 523 637
- GB-A- 2 333 978
- US-A1- 2003 181 327
- US-B1- 6 379 589
- SANDROCK G: "A panoramic overview of hydrogen storage alloys from a gas reaction point of view", JOURNAL OF ALLOYS AND COMPOUNDS, ELSEVIER SEQUOIA, LAUSANNE, CH, vol. 293-295, 20 December 1999 (1999-12-20), pages 877-888, XP004364743, ISSN: 0925-8388, DOI: 10.1016/S0925-8388(99)00384-9

## Beschreibung

Die Erfindung betrifft ein Verfahren zum Erzeugen von Wasserstoff durch katalytische Spaltung organischer Wasserstoffquellen, vorzugsweise von Alkoholen, Carbonsäuren, Aldehyden und Kohlehydraten, im Fluidzustand, d.h. als Flüssigkeit, Gas oder als Flüssigkeitsnebel. Weiterhin betrifft die Erfindung Schüttkörper zur Verwendung in einer Anlage, die zur Durchführung des Verfahrens geeignet ist.

Angesichts der globalen Herausforderungen zum Klima- und Ressourcenschutz werden in den kommenden Jahren neue innovative Lösungen zur Energiegewinnung, Energieumwandlung und Nutzung benötigt werden. Um die Nutzung von erneuerbaren Energien zu etablieren, ist es nötig die Energieeffizienz zu verbessern und die Produktion dezentral zu organisieren, was hochwirksame Technologien voraussetzt, die sowohl in Kleinem als auch im Großen wirtschaftlich realisierbar sind.

Eine Schlüsseltechnologie auf diesem Weg stellen die Brennstoffzellentechnologie mit einem hohen elektrischen Wirkungsgrad von 70 bis 80 %, aber auch andere dezentrale Anlagen insbesondere unter Anwendung der Kraft-Wärme(Kälte)-Kopplung ("KW(K)K-Technologie") dar ("Der Beitrag regenerativer und rationeller Energienutzung zur wirtschaftlichen Entwicklung in Nordrhein-Westfalen", Wuppertal, Juni 2004). Der Einsatz von Wasserstoff in KW(K)K-Anlagen hat gegenüber demjenigen von Kohlenwasserstoffen (z.B. aus fossilen Energieträgern) den besonderen Vorteil, dass als Abprodukt im Wesentlichen Wasser und keine klima- oder gesundheitsschädigenden Verbindungen anfallen.

Wasserstoff ist das leichteste aller Elemente. Ein Gasmolekül H₂ besteht aus zwei Wasserstoffatomen. Seine Energiedichte ist außergewöhnlich hoch (Der Energiegehalt von einem kg H₂ entspricht etwa demjenigen von 3,5 Litern Erdöl). Deshalb wurde Wasserstoff als Treibstoff schon früh dort eingesetzt, wo das Gewicht ein größeres Problem als das Volumen darstellt, nämlich in der Raumfahrt.

Aber auch in weniger hochtechnologischen Gebieten hat Wasserstoff Tradition. In der ersten Hälfte des 20. Jahrhunderts beruhte die gesamte Gasversorgung auf Stadtgas. Dieses Kohlegas besteht zu mehr als der Hälfte aus Wasserstoff. Mit der zunehmenden Erschließung der Erdgasvorkommen wurde das Stadtgas jedoch vom Erdgas verdrängt. Die heute größten Endanwendungen sind H₂-Industriebrenner und Gasturbinen mit H₂-Erdgas-Gemischen. "Durch hohe Benzinpreise, Jahrhundertüberschwemmungen, Weltklimakonferenz - aus verschiedenen Gründen hat Wasserstoff (H₂) als Energieträger in der aktuellen Diskussion immer wieder Konjunktur" (Aufsatz von N. Toenges, "Wasserstoff als Energieträger" vom 01.01.2003, Internet-Homepage des Solarenergie-Fördervereins Deutschland e.V.).

Wasserstoff wird heute großtechnisch hergestellt durch
- Elektrolyse von Wasser, Natronlauge oder wässrigen Kochsalzlösungen,
- Zersetzung von Wasser durch Alkalimetalle und
- Chemische Reaktion (Reformierung) von Erdgas und anderen Kohlenwasserstoffen mit Wasserdampf (Dampfreformierung), Sauerstoff (partielle Oxidation), Dampf und Sauerstoff (autotherme Reformierung).
(Wikipedia, die freie Enzyklopädie, Stichwort "Wasserstoff").

Neben dem Ziel einer sparsamen Nutzung der Energieressourcen stellen die maximal tolerierbaren Klimaänderungen durch Treibhausgasemissionen und daraus abgeleitete Umwelthandlungsziele zum Klimaschutz die eigentliche Grenze für einen vertretbaren Energieeinsatz dar. Zwischenziele auf dem Weg zum Klimaschutzziel sind die im Nationalen Klimaschutzprogramm (BREG 2000) bestätigten nationalen Ziele für den Klimaschutz:
- Minderung der Emissionen von CO₂ bis 2005 gegenüber 1990 um 25%
- Minderung der Emissionen der sechs Treibhausgase des Kyoto-Protokolls von 2008 bis 2012 im Rahmen der EU-Lastenverteilung um 21 % für Deutschland

Als weiteres wichtiges Etappenziel in Richtung einer nachhaltigen Energienutzung ist die Minderung der CO₂-Emissionen um 40 % bis 2020 gegenüber dem Bezugsjahr 1990 zu betrachten.

Die Kernenergie kann nicht die Vermeidung der Belastung zukünftiger Generationen, die Umwelt- und die Gesundheitsverträglichkeit sowie Risikoarmut und Fehlertoleranz bei der Nutzung sicherstellen. Wird Energie aus fossilen Ressourcen gewonnen, steigt die CO₂-Bilanz global weiter an. Durch Nutzung regenerativer Energieträger wird durch den Prozess der Energiegewinnung nur so viel CO₂ freigesetzt, wie bei der Bildung dieser Energieträger verbraucht wurde. Biomasse kann nachhaltig produziert werden und schont die fossilen Ressourcen. Sie kann von der nationalen Land- und Forstwirtschaft in großen Mengen bereitgestellt werden und vermindert somit die Importabhängigkeit.

Die Bundesregierung hat die Klimaschutzziele
- Erhöhung des Anteils erneuerbarer Energien bei der Primärenergieerzeugung auf 10 % und in der Stromerzeugung auf 20% bis 2020 und
- die Bereitstellung von 50 % des Primärenergieverbrauchs aus regenerativen Quellen bis 2050
formuliert und festgelegt.

Als regenerative Quellen kommt sowohl Biomasse, die als Abfallprodukt in der holzverarbeitenden Industrie, als Exkremente als oder Ernterückstand in der Landwirtschaft und Rückstände in der Weiterverarbeitung entsteht, in Betracht, als auch die Erzeugung von sogenannten Energiepflanzen, die einzig zur Erzeugung von Energie angebaut werden. Da es weltweit ein Überangebot an Zucker gibt, wird es insbesondere in Europa und Südamerika von Interesse sein die Überschussproduktion an Zuckerrüben bzw. Zuckerrohr wirtschaftlich zu verwerten. Die jährlich sinkenden Zuckerweltmarktpreisen machen die alternativen Verwertungen von Zucker immer attraktiver. Als Industrierohstoff wird Zucker in Deutschland derzeit in einer Größenordnung von 50 000 Jahrestonnen hauptsächlich in biotechnischen Prozessen und für die Herstellung von Polyurethanen eingesetzt.

Als Stand der Technik für einzelne verfahrenstechnische Aspekte der vorliegenden Erfindung sind die folgenden bekannten technischen Entwicklungen zu berücksichtigen:

Seit langem ist es bekannt, schüttfähige Katalysatoren, beispielsweise zur Durchführung der Reaktion von Kohlenwasserstoffen mit Wasserdampf zu Heizgas oder Synthesegas, im Kreislauf von einem Reaktionsgefäß zu einem Regenerationsgefäß und zurück zu bewegen (DE 953 160 B). Die Bewegung des schüttfähigen Katalysators erfolgt dabei durch mechanische Mittel, wie durch einen Eimerkettenaufzug oder durch einen Dampfstrahl.

Die Verwendung von Magnetfeldern zur Bewegung magnetischer Körper ist in der mechanischen, chemischen und biologischen Verfahrenstechnik bekannt. In EP 0 510 256 B1 sowie in US 5.348.237 werden mit sich örtlich und sich zeitlich ändernden Feldern (Drehfelder), die auf magnetische Arbeitskörper in einem geschlossenen Volumen einwirken, so dass dieselben intensive translatorische Querbewegungen und Taumelbewegungen ausführen, pumpfähige Mehrphasengemische zerkleinert, dispergiert, benetzt und/oder gemischt. Die erforderlichen Feldintensitäten und -gradienten (örtlich und zeitlich) sind insbesondere zur Durchführung von Zerkleinerungsprozessen sehr groß (45 kA/m bis 120 kA/m), um ausreichende Beanspruchungsintensitäten und dadurch Bruchereignisse in den Mehrphasengemischen auszulösen.

In DE 199 55 219 A1 wird zur Desintegration von Biomassen vorgeschlagen, durch kurzzeitige Einwirkung niederfrequenter elektromagnetischer Felder, gegebenenfalls mit Unterstützung von hartmagnetischen, inerten Arbeitskörpern, Zellwände aufzuschließen und zu zerkleinern, so dass die Bestandteile der Biomassen separierbar sind, und nachfolgende biologische Abbauprozesse beschleunigt werden. Auch hier sind, wie in den vorgenannten Patenschriften EP 0 510 256 B1 und US 5.348.237 A die erforderlichen Arbeitskörper hartmagnetisch, vorzugsweise kugel- oder tonnenförmig, mit einem Durchmesser von 1 mm bis 4 mm. Sie müssen weiterhin mechanisch stabil sein, damit die Verunreinigungen des Mehrphasengemisches infolge Materialverschleißes in Grenzen gehalten werden können. Weitere funktionelle Eigenschaften besitzen sie nicht!

Seit längerem sind in der Carrier-Technologie sogenannte Magnetobeads in Form von funktionalisierten magnetischen Partikeln oder Kugeln bekannt. Eine umfassende Übersicht dazu wird in der Veröffentlichung Pieters, B. R.; Williams, R. A.; Webb, C.: Magnetic carrier technology. In: Williams, R. A. (Ed.): Colloid and Surface Engineering: Applications in the Process Industries. Butterworth Heinemann, Oxford 1992, S. 249-286 gegeben. Der Einsatz solcher Magnetobeads erfolgt hauptsächlich in der Biotechnologie (Biokatalyse, Immobilisierung, Separation, Analyse). Diese bekannten Magnetobeads bestehen ausschließlich aus Magnetit bzw. sind damit beschichtet oder gemischt mit einem Polymer, und sie haben je nach Anwendung Abmessungen im Bereich von 0,2 µm bis150 µm. Sie sind damit weichmagnetisch. Ihre Manipulation erfolgt mittels Permanentmagneten bzw. äußeren oder den Reaktor umschließenden Spulenanordnungen, die kurzzeitig oder periodisch abwechselnd mit einem Gleichstrom gespeist werden. Die benutzten Felderregeranordnungen lassen nur geringe Prozessvolumina zu. Damit sind nur kleine Mengen magnetischer Träger manipulierbar.

Ebenfalls bekannt sind speziell funktionalisierte Magnetobeads für die Reinigung industrieller Abgase (DE 102 46 984 A1), welche aus einem Ferrit-Granulat bestehen, das neben hartmagnetischen Eigenschaften eine adsorbierende Porenstruktur und H₂S-absorbierende Phasen aufweist. Die hartmagnetischen Eigenschaften der Ferrit-Granulate ermöglichen mittels eines äußeren elektrischen Erregersystems eine stabile Fluidisierung der Granulate in einer mit dem Abgas durchströmten aus nichtferromagnetischen Materialien bestehenden Prozesskammer.

Weiterhin bereits bekannt sind magnetische Gleichfeldanordnungen zur Manipulation einzelner oder mehrerer kleiner ferromagnetischer Objekte, insbesondere Partikel, die als Träger chemischer Proben dienen, aus einer geordneten Matrix und zum Transport, ohne die relative Lage der Objekte zueinander zu beeinflussen. Anwendungsgebiete für derartige magnetische Manipulatoren sind chemische Synthesen, biologisches Screening und Analytik (Halbedel, B.; Albrecht, A.; Frank, Th.; Henkel, Th.; Kunze, U.; Mayer, G.; Schober, A.; Wurmus, H.: Magnetische Komponenten für die Mikroreaktionstechnik. Mat.-wiss. u. Werkstofftechnik 34 (2003), S. 677 - 679).

Als Stand der Technik für einzelne Aspekte der Katalyse-Chemie der Erzeugung von Wasserstoff durch katalytische Spaltung organischer Wasserstoffquellen, vorzugsweise von Alkoholen, Carbonsäuren, Aldehyden und Kohlehydraten, im Fluidzustand sind die folgenden bekannten technischen Entwicklungen zu berücksichtigen:

Die bekannten Verfahren nutzen einen Reformingprozess, um Glukose bzw. Fructose unter Verwendung eines Katalysators bei erhöhten Temperaturen und Drücken in Wasserstoff und Kohlendioxid zu spalten. Der zugrunde liegende Reaktionsmechanismus lautet:

CₙH₂ₙOₙ + nH₂O → 3nH₂ + nCO₂,

wobei n = 5 oder 6 ist.

R. D. Cortright und R.R. Davda verwendeten dabei Platinkatalysatoren, Temperaturen zwischen 200 °C und 300 °C und Drücke von 30 bar bis 50 bar um o.g. Reaktion durchzuführen (Hydrogen from Catalytic Reforming of Biomass-Derived Hydrocarbons in Liquid Water, Nature 418, 964 (2002) sowie U.S.-Patent 6.699.457).

Problematisch und aufwendig dabei ist die Trennung des synthetisierten Wasserstoffes vom Kohlendioxid und Wasser. Für die Reinigung des H₂ werden in US 6.699.457 spezielle Membranen verwendet, die die Aufgabe haben, die entstehenden Gase H₂ und CO₂ voneinander zu trennen, um die für Brennstoffzellen nötige Reinheit des Wasserstoffes zu erzielen. Diese Membranen sind sehr kostenintensiv und wirken in Bezug auf einen Dauerbetrieb einer entsprechenden Anlage laufzeitbegrenzend.

Weiterhin sind aus WO 2004/053175 A2 Legierungen aus Pd oder Pt und einem aus Ni, Co bzw. Fe gewähltem weiteren Element bekannt, so dass die Legierung magnetische Eigenschaften aufweist. Weiterhin offenbart diese Schrift, dass diese Legierung für eine Wasserstoffspeicherung oder für die katalytische Reaktion geeignet ist. Weder für die Verwendung der Legierung als Katalysator für die Spaltung organischer Wasserstoffquellen, noch für die Bewegung von Schüttkörpern mittels äußerer Magnetfelder gibt diese Schrift jedoch einen Hinweis.

Ziel der Erfindung ist es daher, den Prozess der Energiegewinnung aus Biomasse zu optimieren und aus organischen Wasserstoffquellen, vorzugsweise aus Alkoholen, Carbonsäuren, Aldehyden und Kohlehydraten, wie Glukose bzw. Fructose, direkt Wasserstoff zu gewinnen. Vom Verfahren wird dabei gefordert, dass der gewonnene Wasserstoff mit einer Reinheit von über 99% direkt für Brennstoffzellen nutzbar ist.

Der Erfindung liegt in diesem Zusammenhang die Aufgabe zugrunde:
1. Die erforderliche Reinheit des Wasserstoffes über ein membranunabhängiges Verfahrensprinzip sicherzustellen.
2. Den Wasserstoff kostengünstig und in hoher Reinheit zu produzieren.
3. Dabei als Ausgangsstoff nachwachsende Rohstoffe einzusetzen.
4. Wobei die Anlagen weltweit, bevorzugt direkt in den Anbaugebieten der Rohstoffe, d.h. dezentral und mit an das Rohstoffaufkommen angepasster Kapazität einsetzbar sein sollen.

Diese Aufgabe wird durch die in den Patentansprüchen beschriebene Erfindung gelöst.

Da die Forschungsgruppe von R. D. Cortright bereits zeigte, dass die Umsetzung in der Gasphase aus thermodynamischen Gründen schlechter durchzuführen ist, soll beim erfindungsgemäßen Verfahren eine Flüssigphasenreaktion durchgeführt werden. Gleichzeitig sollen aber auch die strömungsmechanischen Vorteile wie geringe Druckverluste und hohe erzielbare Strömungsgeschwindigkeiten realisiert werden. Dies soll durch einen Edukteingang mittels Microsprayer und einer daraus entstehenden Wolke kondensierter Tröpfchen realisiert werden.

Weiterhin verwenden die bekannten Verfahren Katalysatorschüttungen mit den verfahrensbedingten Nachteilen wie der geringen und inhomogenen Vermischung mit der Flüssigphase, der Ausbildung laminarer Strömungsverhältnisse und der damit begrenzten Kinetik der Reaktion. Daher werden beim erfindungsgemäßen Verfahrens der Katalysator mit einem ferromagnetischen Material und einem H2-Speichermaterial in Schüttkörpern kombiniert, so dass diese berührungslos mittels äußerer Magnetsysteme kontrolliert gesteuert bewegt, verwirbelt und zur Trennung von den anderen Reaktionsphasen transportiert werden können.

Dadurch wird die Verwendung von Membranen zur Produktgasauftrennung vermieden, und der entstehende Wasserstoff kann gemeinsam mit dem erfindungsgemäßen ferromagnetischen Schüttkörper mittels eines Magnetsystems aus dem Reaktionsgefäß bzw. -bereich geschleust werden.

Die H₂-Speicherung wird durch Metallhydride ermöglicht. Einige metallische Elemente, intermetallische Verbindungen und mehrphasige Legierungen können Wasserstoff, ähnlich wie ein Schwamm aufsaugen. Die heutige Speicherkapazität liegt zwischen 1,5 Ma-% und 6,5 Ma-%. Beispiele hierfür sind Hydride von Aluminium, Magnesium, Palladium, LaNi₅ und TiNi-Ti₂Ni. Von Komplexhydriden, wie beispielsweise Mg(BH₄)₂ und Al(BH₄)₃, werden Speicherkapazitäten von bis zu 20 Ma-% erwartet (HERA Hydrogen Storage Systems GmbH). Die Wasserstoffatome werden auf der Oberfläche des Metalls adsorbiert oder werden chemisch gebunden, indem sie als Einlagerungs- oder Zwischengitteratome im Kristallgitter dieser Metalle eingebaut werden.

Die Anlagerung des gasförmigen Wasserstoffes erfolgt bei einem Druck von 0 bis 60 bar. Die Erhöhung des Druckes hat eine erhöhte Wasserstoffkonzentration im Kristallgitter zur Folge. Die Desorption des Wasserstoffes kann durch Erhöhung der Temperatur und/oder durch Verringerung des Drucks erfolgen.

Als ferromagnetische Materialien sind keramische Ferritwerkstoffe, wie z.B. Barium- oder Strontiumhexaferrit, aber auch Mn-Zn-Ferrite geeignet. Sie werden aus feindispersen Pulvern mit Granulierverfahren, die einen hochdichten Kern herstellen lassen, beispielsweise Intensivmischung im Vakuum, und nachfolgender Sinterung hergestellt. Dadurch erhält der Kern hinreichend gute magnetische Eigenschaften, um eine ausreichende Bewegbarkeit und Transport mit Magnetfeldern ≤ 1 Tesla zu gewährleisten. Zudem ist er inert und besitzt Curietemperaturen > 300°C.

Auf die ferromagnetischen Kerne werden die Metallhydride als hochporöse Schicht, die wie ein Molekularsieb wirkt und nur H₂ durchlässt, gebracht. Anschließend erfolgt die Infiltration mit dem Katalysatormaterial, sofern nicht unterschiedliche Schüttkörper eingesetzt werden, von denen ein Teil nur eine Metallhydridschicht und ein anderer Teil nur eine Katalysatorschicht aufweist.

Nachfolgend wird die Erfindung an je einem Ausführungsbeispiel für die Kategorien Verfahren, sowie Schüttkörper zur Verwendung in einer Anlage, die zur Durchführung des Verfahrens geeignet ist näher erläutert, wobei der Schüttkörper zuerst erläutert wird, weil dies zum Verständnis des Verfahrens unerlässlich ist, obwohl er entsprechend dem Prinzip "Vom Allgemeinen zum Speziellen!" in den Patentansprüchen zuletzt behandelt wird.

Die beigefügten Zeichnungen stellen dar:
- Fig. 1:: einen Schnitt durch einen erfindungsgemäßen Schüttkörper nach Anspruch 9
- Fig. 2.1:: eine schematische Darstellung der linken Hälfte einer Anlage
- Fig. 2.2:: eine schematische Darstellung der rechten Hälfte einer Anlage
- Fig. 3:: eine schematische Darstellung eines Reaktorbehälters der Anlage mit einer Elektromagnetanordnung zur Erzeugung zeitlich veränderbarer Magnetfelder,
- Fig. 4a:: den zeitlichen Verlauf des Stromes durch die Elektromagnetanordnung von Fig. 3 für eine sich wiederholende impulsartige Erregung,
- Fig. 4b:: den zeitlichen Verlauf des Stromes durch die Elektromagnetanordnung von Fig. 3 für eine sich wiederholende impulsartige alternierende Erregung,
- Fig. 5a:: eine schematische Darstellung einer Transportmagnetanordnung mit einem Dauermagneten
- Fig. 5b:: eine schematische Darstellung einer Transportmagnetanordnung mit einem Gleichfeld-Elektromagneten,
- Fig. 6:: eine schematische Darstellung einer Transportmagnetanordnung mit Mehrspasenstromspeisung und
- Fig. 7:: eine schematische Darstellung einer Transportmagnetanordnung mit Speisung durch einen zeitlich veränderbaren Strom

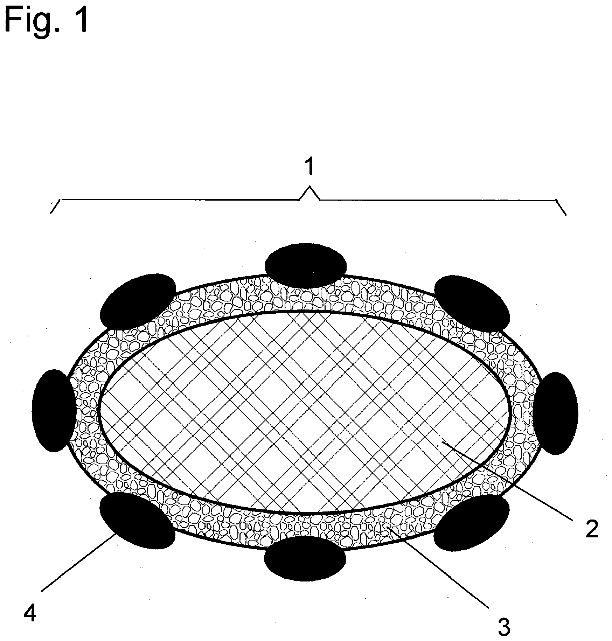

Die Erfindung baut auf Schüttkörpern 1 (Fig. 1) auf, welche einen zum Erzeugen von Wasserstoff durch katalytische Spaltung organischer Wasserstoffquellen, vorzugsweise von Alkoholen, Carbonsäuren, Aldehyden und Kohlehydraten, im Fluidzustand wirksamen Katalysator (4) tragen und Wasserstoff zu speichern vermögen sowie durch die Einwirkung äußerer Magnetfelder manipulierbar sind.

Ein solcher Schüttkörper 1 (Fig. 1) weist beispielsweise einen hartmagnetischen Kern 2 aus Ba-Sr-Hexaferrit auf, welcher die Gestalt eines gestreckten Ellipsoids hat, das allseitig mit einer etwa 1 mm dicken offenporösen Schicht 3 aus Aluminiumhydrid zur Wasserstoffspeicherung bedeckt ist. Die Abmessungen des Kerns 2 mit der offenporösen Schicht 3 betragen in der Längsachse etwa 10 mm und in den beiden Querachsen etwa 6 mm. Etwa ein Drittel der Oberfläche der offenporösen Schicht 3 ist fleckenartig mit einem Platinkatalysator 4 infiltriert.

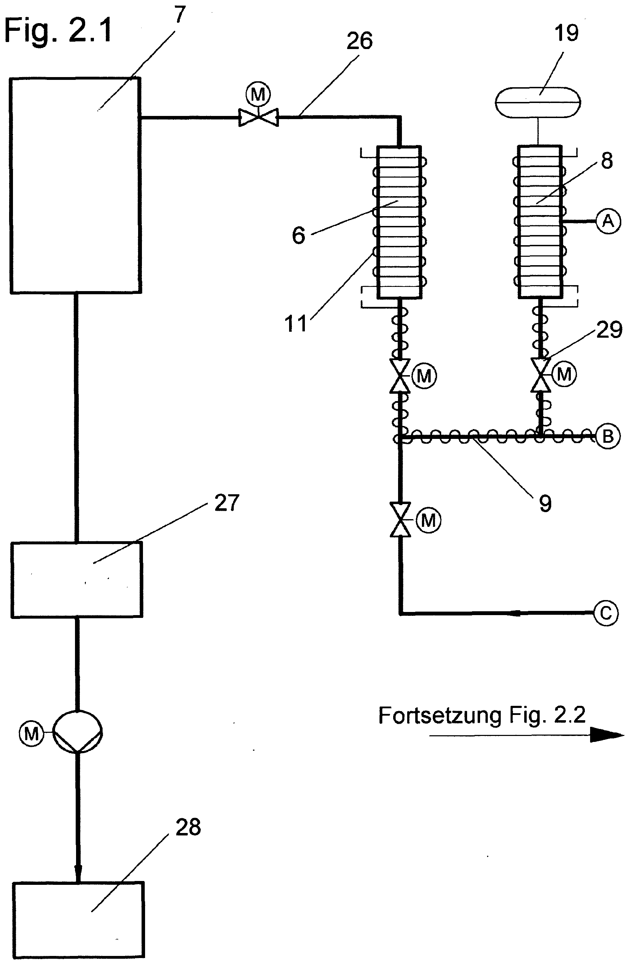

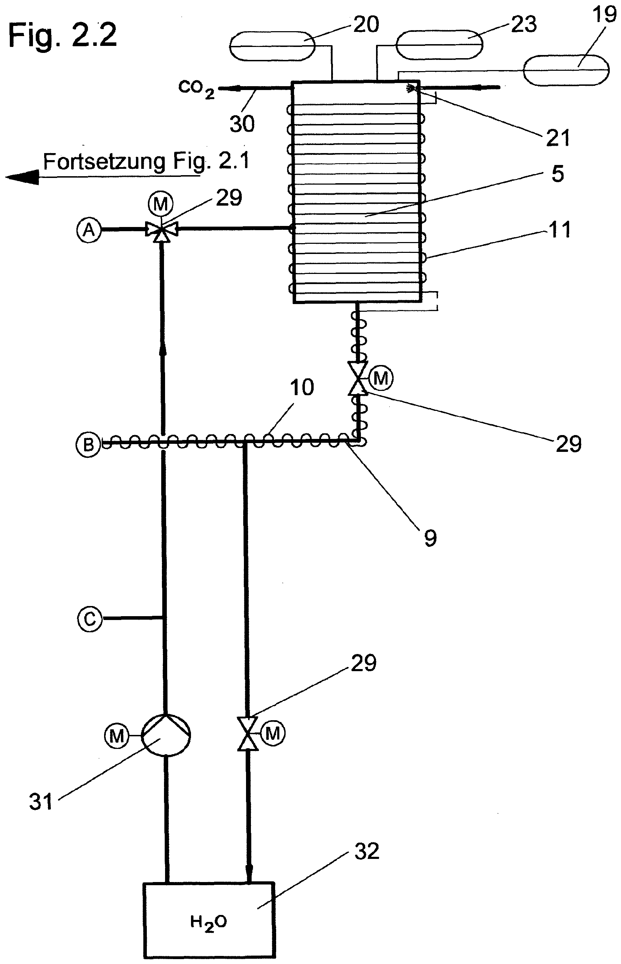

Die schematische Darstellung einer Anlage, die zur Durchführung des Verfahrens geeignet ist musste in die Fig. 2.1 und 2.2 aufgeteilt werden, wobei die Verbindungsstellen der dabei darstellungsmäßig getrennten Leitungen mit A - A, B - B und C - C, jeweils von einem Kreis umgeben, gekennzeichnet wurden Die Anlage weist mehrere durch absperrbare Schüttkörper-Transportleitungen 9 bzw. Gasleitungen 26 in der dargestellten Weise verbundene Behälter 5, 6, 7 und ggf. 8 zur Aufnahme und verfahrenskonformen Behandlung der Schüttkörper 1 auf.

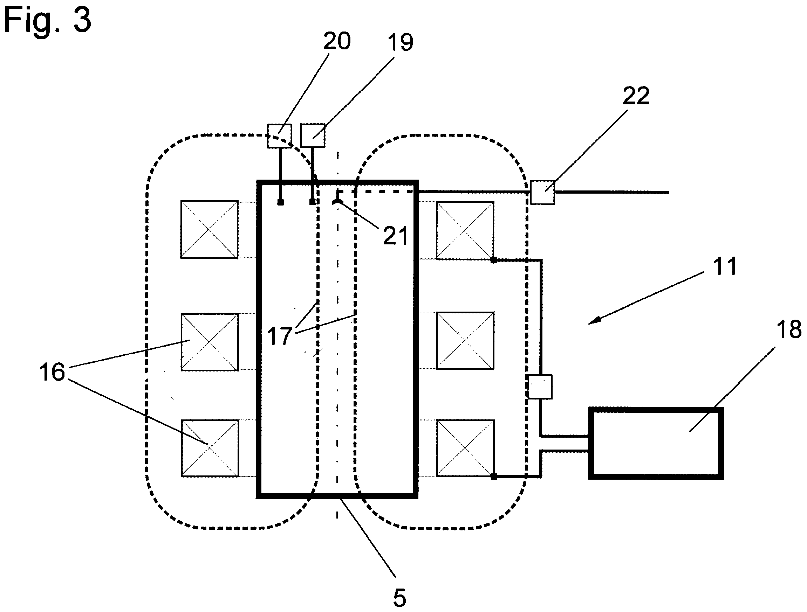

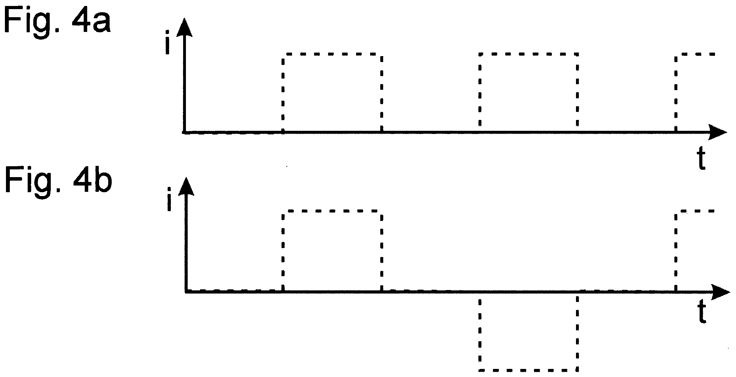

Der Reaktorbehälter 5 (Fig. 2.2) hat die Funktion des Beladungsreaktors. In ihm befinden sich die Schüttkörper 1 in der ersten Phase des Verfahrens. Der Reaktorbehälter 5 ist von einer Elektromagnetanordnung 11 umgeben, welche ein steuerbares, sich zeitlich änderndes Magnetfeld erzeugt 17, das den Reaktorbehälter 5 durchdringt (Fig. 3). Geeignet dazu sind ortsfeste Ringspulen 16, die von einem Steuergerät 18 kurzzeitig und ggf. periodisch in der Richtung wechselnd mit einem elektrischen Strom i(t) gespeist werden (Fig. 4a und 4b).

In diesem Reaktorbehälter 5 wird nach der Einstellung der Prozessparameter, beispielsweise eines Druckes von 50 bar (Bereich von 10 bar bis 50 bar) und einer Temperatur von 250 °C (Bereich von 50 °C bis 300 °C), was über einen Drucksensor 19 und einen Temperatursensor 20 kontrolliert wird, eine organische Wasserstoffquelle (beispielsweise eine Zuckerlösung) über eine Düse 21 eingesprüht und mittels des Katalysators 4 auf den Schüttkörpern 1, beispielsweise nach der eingangs für Glukose bzw. Fructose genannten Reaktionsgleichung zu Wasserstoff und Kohlendioxid umgesetzt. Während der Reaktionsphase werden die Schüttkörper 1 durch ein sich zeitlich änderndes Magnetfeld 17 (Fig. 3) ständig umgewälzt bzw. fluidisiert, so dass eine ausreichende Vermischung in den fluidischen Phasen stattfindet. Der entstehende Wasserstoff wird in der porösen Metallhydridschicht 3 der Schüttkörper 1 (Fig. 1) ad- bzw. absorbiert. Temperatur, Druck, Zuführrate der Wasserstoffquelle und zeitlicher Verlauf der Magnetfeldstärke werden entsprechend dem optimalen Umsatz der katalytischen Reaktion und der Aufnahmekinetik des Metallhydrids 3 geregelt. Dazu werden die Zuführrate der Wasserstoffquelle mittels einer Durchflussregelung 22, der Strom in der Ringspule 16 sowie mittels eines CO₂-Sensors 23 (Fig. 2.2) die CO₂-Konzentration im Reaktorbehälter 5 gemessen. Mit fortschreitender katalytischer Reaktion, d.h. bei Annäherung der erzeugten Wasserstoffmenge an die Aufnahmekapazität des Metallhydrids 3 der im Reaktorbehälter befindlichen Charge von Schüttkörpern 1 werden die Parameter im Reaktorbehälter 5 an diejenigen für die Wasserstoffspeicherung im porösen Metallhydrid 3 angeglichen, d.h. die Temperatur wird auf 50 °C (Bereich von 30 °C bis 300 °C) abgesenkt, wobei durch die Anlagerung und Bindung des Wasserstoffs an den Festkörper Metallhydrid naturgemäß auch der Druck absinkt. Die für den erfindungsgemäßen Transport der Schüttkörpercharge in einen Entladungsbehälter 6 (Fig. 2.1) erforderliche Druckangleichung wird durch Ablassen des CO₂ aus dem Reaktorbehälter 5 unterstützt.

Um den Wasserstoff wieder desorbieren zu können und gleichzeitig eine Trennung vom unerwünschten Kohlendioxid zu erreichen, wird ein Entladungsbehälter 6 benutzt. Um dabei die bekannten Nachteile von Trennmembranen zu umgehen, wird erfindungsgemäß ein Wasserschloss zur Abdichtung des Reaktorbehälters 5 vom Entladungsbehälter 6 eingesetzt. Das Wasserschloss ist so gestaltet, dass im Reaktorbehälter 5 nur eine geringe Wasserschicht im unteren Reaktorbereich etabliert wird. Die Schüttkörper-Transportleitungen 9 zwischen den Behältern 5 (Fig. 2.2) und 6 (Fig. 2.1) sind hingegen vollständig mit Wasser gefüllt.

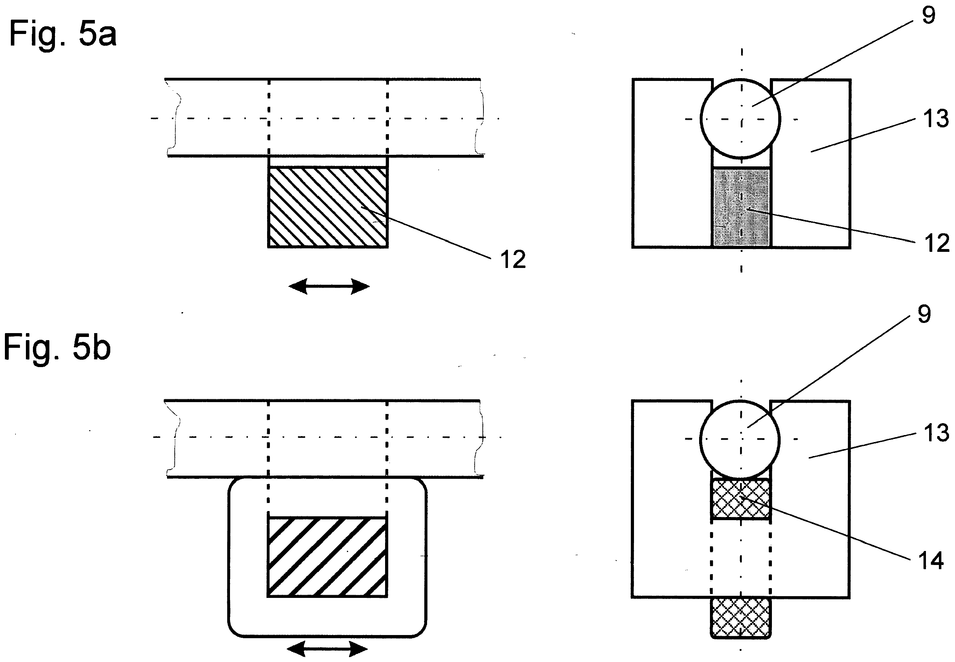

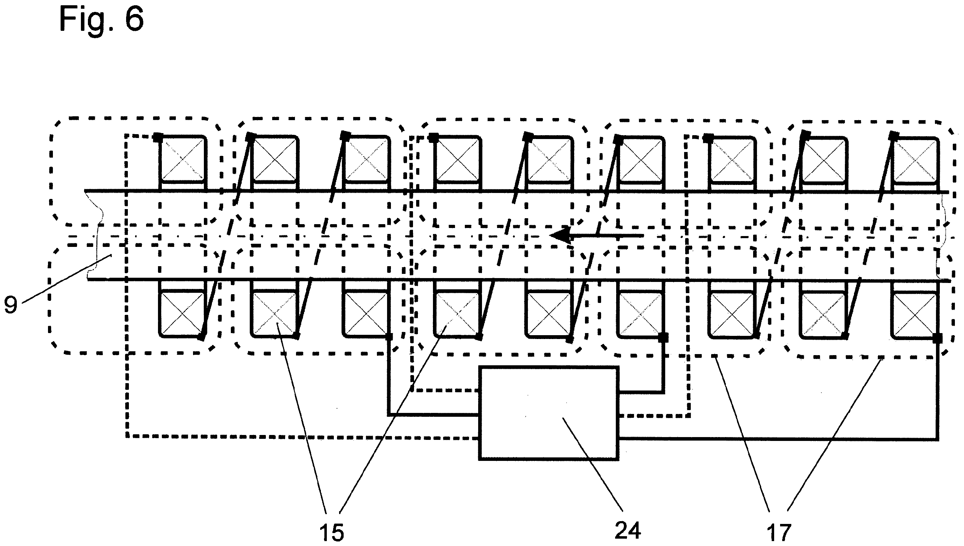

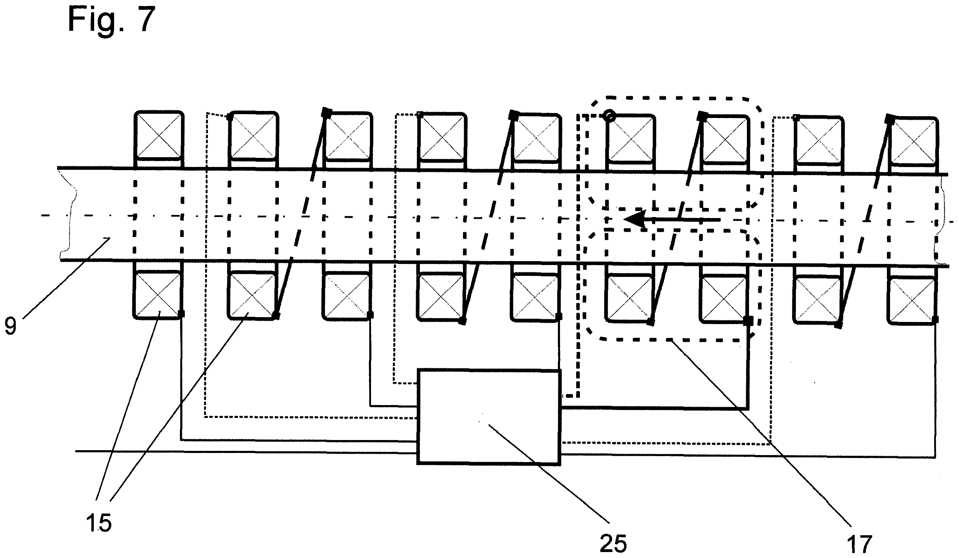

Der Transport der Schüttkörper 1 durch die Schüttkörper-Transportleitungen 9 erfolgt mittels eines ortsveränderlichen Magnetfeldes. Dazu wird die Elektromagnetanordnung 11 des Reaktorbehälters 5 ausgeschaltet und eine Transportmagnetanordnung 10 (Fig. 2.2) aktiviert. Für den berührungslosen magnetischen Transport eignen sich entlang der Schüttkörper-Transportleitung 9 bewegbare Gleichfeldanordnungen mit Dauermagneten 12 (Fig. 5a) oder Gleichfeld-Elektromagneten 14 (Fig. 5b) zur magnetischen Flusserzeugung, einem magnetischen Rückschluss 13 zur Flussführung und einem Luftspalt, in welchem die Schüttkörper-Transportleitung 9 angeordnet ist (Fig. 5a und 5b). Geeignet ist auch ein System ortfester eisenloser Spulen 15, verteilt entlang des Transportweges in der Schüttkörper-Transportleitung 9, die entweder von einem Mehrphasenstrom, erzeugt von einem Frequenzumrichter 24, durchflossen werden und ein Wanderfeld 17 in Transportrichtung erzeugen (Fig. 6) oder zeitlich nacheinander mit einem elektrischen Strom durchflossen werden, generiert von einem entsprechend ausgelegten Programmsteuergerät 25, so dass in jedem Fall die ferromagnetischen Schüttkörper, wie durch einen Pfeil in der Schüttkörper-Transportleitung 9 angedeutet, in Transportrichtung gezogen werden (Fig. 7). Aus Effizienzgründen sind die Schüttkörper-Transportleitungen 9 zwischen den Behältern 5 und 6 bzw. 6 und 7 kurz gehalten.

Vor und während der Transportphase wird mittels einer Wasserpumpe 31 aus einem Wasservorratsbehälter 32 im Entladungsbehälter 6 der gleiche Druck wie im Reaktorbehälter 5 eingestellt, so dass kein Gegendruck beim Transport zu überwinden ist und die Schüttkörper 1 nicht entladen werden.

Wenn alle Schüttkörper aus dem Reaktorbehälter 5 (Fig. 2.2) in den Entladungsbehälter 6 (Fig. 2.1) überführt worden sind, wird die Schüttkörper-Transportleitung 9 zum Reaktorbehälter 5 durch einen Verschluss, bspw. ein Motorventil 29 verschlossen und das Wasser aus diesem Entladungsbehälter 6 (Fig. 2.1) abgelassen. Dadurch erfolgt bereits eine Entspannung in demselben und somit eine Desorption des gespeicherten Wasserstoffes bei einer typischen Einstellung der Prozessparameter, beispielsweise eines Druckes von 1 bar (Bereich von 0,5 bar bis 2,5 bar) und einer Temperatur von 50 °C (Bereich von 30 °C bis 300 °C).

Ist das Wasser aus dem Entladungsbehälter 6 vollständig entfernt, wird eine Gasleitung 26 zum Entspannungsbehälter 7 geöffnet. Diese Gasleitung 24 wird am Kopf des Entladungsbehälters 6 angeordnet, damit eine Restentleerung durch Befüllen mit Wasser erfolgen kann.

Aus dem Entspannungsbehälter 7 wird der gasförmige Wasserstoff abgeführt und nach dem Durchlaufen eines Entfeuchters 27 in einem Wasserstoffspeicher 28 in eine speicherfähige Form überführt (Verflüssigung oder wiederum Speicherung in Metallhydriden).

Während des Desorptionsvorganges im Entladungsbehälter 6 wird der Reaktorbehälter 5 über den CO₂-Auslass 30 entspannt. Zeitgleich wird ein Zwischenlagerbehälter 8, welcher eine zweite Charge Schüttkörper 1 enthält, mittels Wasser unter Reaktions-Druck gesetzt. Danach wird diese zweite Charge Schüttkörper 1 über die entsprechende Schüttkörper-Transportleitung 9 in den Reaktorbehälter 5 (Fig. 2.2) überführt, wodurch der nächste Reaktionszyklus in Gang gesetzt werden kann.

Nach Abschluss der Desorption im Entladungsbehälter 6 wird die dort befindliche erste Charge Schüttkörper 1 über die entsprechende Schüttkörper-Transportleitung 9 magnetisch in der oben geschilderten Weise in den Zwischenlagerbehälter 8 und nach Bedarf zu einer erneuten Aufladung in den Reaktorbehälter 5 überführt. Je nach der geforderten Flexibilität bezüglich der Leistungsfähigkeit der Anlage, d.h. je nach der Schwankungsbreite des Durchsatzes sind auch Anlagen denkbar die nur mit einer Charge Schüttkörper 1 und ohne Zwischenlagerbehälter 8 oder auch mit mehr als zwei Chargen und entsprechend mehr Zwischenlagerbehältern 8 und Reaktorbehältern 5 arbeiten.

### Bezugszeichenliste

- 1: Schüttkörper
- 2: ferromagnetischer Kern
- 3: offenporöse Metallhydridschicht
- 4: Katalysator
- 5: Reaktorbehälter
- 6: Entladungsbehälter
- 7: Entspannungsbehälter
- 8: Zwischenlagerbehälter
- 9: Schüttkörper-Transportleitung
- 10: Transportmagnetanordnung
- 11: Elektromagnetanordnung zur Erzeugung eines zeitlich veränderbaren Magnetfeldes
- 12: Dauermagnet
- 13: Magnetkreis
- 14: Gleichfeld-Elektromagnet
- 15: Spule
- 16: Ringspule
- 17: Wanderfeld
- 18: Steuergerät
- 19: Drucksensor
- 20: Temperatursensor
- 21: Düse
- 22: Durchflussregelung
- 23: CO₂-Sensor
- 24: Frequenzumrichter
- 25: Programmsteuergerät
- 26: Gasleitung
- 27: Entfeuchter
- 28: Wasserstoffspeicher
- 29: Motorventil
- 30: CO₂-Auslass
- 31: Wasserpumpe
- 32: Wasservorratsbehälter

## Patentansprüche

1. Verfahren zum Erzeugen von Wasserstoff durch katalytische Spaltung organischer Wasserstoffquellen im Fluidzustand, **dadurch gekennzeichnet, dass** magnetisch manipulierbare Schüttkörper (1), welche einen bei der Spaltung wirksamen Katalysator (4) tragen und Wasserstoff zu speichern vermögen, durch Einwirkung äußerer Magnetfelder in einem Kreislauf mit folgenden Phasen geführt werden:
- Aufenthalt der Schüttkörper (1) in einem mit organischen Wasserstoffquellen im Fluidzustand beschickten Reaktorbehälter (5) unter Druck-, Temperatur- und Konzentrationsbedingungen der katalytischen Spaltung und anschließend unter Druck- und Temperatur- und Konzentrationsbedingungen der Wasserstoffspeicherung,
- Überführen der Schüttkörper (1) mittels äußerer Magnetfelder unter Abdichtung gegenüber dem Reaktorbehälter (5) in einen Entladungsbehälter (6),
- Aufenthalt der Schüttkörper (1) im Entladungsbehälter (6) unter Druck- und Temperaturbedingungen der Freisetzung des gespeicherten Wasserstoffes sowie Entnahme des freigesetzten Wasserstoffes aus dem Entladungsbehälter (6) und
- Rückführen der Schüttkörper (1) in den Reaktorbehälter (5).

2. Verfahren nach Anspruch 1, **dadurch gekennzeichnet, dass** der Fortgang der katalytischen Spaltung im Reaktorbehälter (5) an Hand der Kohlendioxidkonzentration überwacht wird.

3. Verfahren nach Anspruch 1 oder 2, **dadurch gekennzeichnet, dass** vor dem Beginn des Transportes der Schüttkörper (1) zwischen dem Reaktorbehälter (5) und dem Entladungsbehälter (6) bzw. umgekehrt der Druck zwischen beiden Behältern (5; 6) angeglichen wird.

4. Verfahren nach einem der Ansprüche 1 bis 3, **dadurch gekennzeichnet, dass** der gewonnene Wasserstoff aus dem Entladungsbehälter (6) in einen Entspannungsbehälter (7) geleitet wird.

5. Verfahren nach einem der Ansprüche 1 bis 4, **dadurch gekennzeichnet, dass** die Schüttkörper (1) den Kreislauf unterteilt in Chargen durchlaufen.

6. Verfahren nach einem der Ansprüche 1 bis 5, **dadurch gekennzeichnet, dass** die Schüttkörper (1) im Reaktor- und/oder Entladungsbehälter (5 bzw. 6) mittels äußerer Magnetfelder fluidisiert und stabilisiert werden.

7. Verfahren nach Anspruch 6, **gekennzeichnet durch** Umwälzen der Schüttkörper (1) im Reaktor- und/oder Entladungsbehälter (5 bzw. 6) mittels äußerer Magnetfelder.

8. Verfahren nach einem der Ansprüche 1 bis 7, **gekennzeichnet durch** Zwischenlagern der entladenen Schüttkörper (1) auf ihrem Weg vom Entladungsbehälter (6) zum Reaktorbehälter (5) in einem oder mehreren Zwischenlagerbehälter(n) (8).

9. Schüttkörper zur Verwendung in einer Anlage, die zur Durchführung des Verfahrens nach den Ansprüchen 1 bis 8 geeignet ist, wobei die Anlage eine absperrbare Schüttkörper-Transportleitung (9) beinhaltet, welche von einer Transportmagnetanordnung (10) zur Erzeugung eines ortsveränderlichen Magnetfeldes umgeben ist, **dadurch gekennzeichnet, dass** auf einem Teil der Außenfläche des Schüttkörpers (1) mit ferromagnetischem Kern (2) eine offenporöse Metallhydridschicht (3) zur Speicherung von Wasserstoff und auf einem anderen Teil ein Katalysator (4) freiliegend angeordnet sind.

## Claims

1. A method for generating hydrogen by catalytic fission of organic hydrogen sources in a fluid state, **characterised in that** magnetically manipulable pourable bodies (1) which bear a catalyst (4) active in the fission and have hydrogen storage capability are conducted by the effect of external magnetic fields through a cycle with the following stages:
- Dwelling of the pourable bodies (1) in a reactor tank (5) charged with organic hydrogen sources in a fluid state under pressure, temperature and concentration conditions of catalytic fission and subsequently under pressure, temperature and concentration conditions of hydrogen storage,
- Transferring the pourable bodies (1) into a discharge tank (6) by means of external magnetic fields, with the reactor tank (5) being sealed,
- Dwelling of the pourable bodies (1) in the discharge tank (6) under pressure and temperature conditions of releasing the stored hydrogen as well as removal of the released hydrogen from the discharge tank (6), and
- Recirculating the pourable bodies (1) into the reactor tank (5).

2. The method according to claim 1, **characterised in that** the progress of the catalytic fission in the reactor tank (5) is monitored based on the carbon dioxide concentration.

3. The method according to claim 1 or 2, **characterised in that**, prior to starting transport of the pourable bodies (1) between the reactor tank (5) and the discharge tank (6) or vice versa, the pressure between the two tanks (5; 6) is levelled.

4. The method according to any of the claims 1 to 3, **characterised in that** the hydrogen obtained is conducted from the discharge tank (6) into a decompression tank (7).

5. The method according to any of the claims 1 to 4, **characterised in that** the pourable bodies (1) complete the cycle in batches.

6. The method according to any of the claims 1 to 5, **characterised in that** the pourable bodies (1) are fluidised and stabilised in the reactor tank (5) and/or discharge tank (6) by means of external magnetic fields.

7. The method according to claim 6, **characterised by** circulating the pourable bodies (1) in the reactor tank (5) and/or discharge tank (6) by means of external magnetic fields.

8. The method according to any of the claims 1 to 7, **characterised by** intermediate storage of the discharged pourable bodies (1) on their way from the discharge tank (6) to the reactor tank (5) in one or more intermediate storage tank(s) (8).

9. Pourable bodies for use in a plant adapted for carrying out the method according to claims 1 to 8, wherein the plant includes a pourable body transport duct (9) capable of being shut off and surrounded by a transport magnet arrangement (10) for generating a mobile magnetic field, **characterised in that** the pourable body (1) with a ferromagnetic core (2) has exposed arrangements on part of the outer surface of an open-porous metal hydride layer (3) for storage of hydrogen and on another part a catalyst (4).

## Revendications

1. Procédé pour produire de l'hydrogène par catalyse à partir de sources d'hydrogène organique en état fluide est **caractérisé en ce que** des matières en vrac (1) manipulables par voie magnétique, servant de support pour un catalyseur (4) très efficace pendant la scission et capables de stocker l'hydrogène, sont amenées sous l'influence de champs magnétiques extérieurs à passer par un circuit aux phases suivantes:
- Présence des matières en vrac (1) dans une cuve (5) chargée de sources d'hydrogène en état fluide soumises aux conditions de pression, de température et de concentration requises pour la scission par catalyse, puis soumises aux conditions de pression, de température et de concentration requises pour le stockage de l'hydrogène,
- moyennant de champs magnétiques extérieurs a lieu le transfert des matières en vrac de manière imperméable par rapport à la cuve du réacteur (5), au récipient de déversement (6),
- présence des matières en vrac (1) dans le récipient de déversement (6) soumises aux conditions de pression et de température requises pour la libération de l'hydrogène stockée et prélèvement de l'hydrogène libérée du récipient de déversement (6) et
- retour des matières en vrac (1) dans la cuve de réacteur (5).

2. Procédé selon la revendication 1 est **caractérisé en ce que** la progression de la catalyse dans la cuve de réacteur (5) est contrôlée sur la base de la concentration de dioxyde de carbone.

3. Procédé selon la revendication 1 ou 2 est **caractérisé en ce qu'**avant de commencer le transfert des matières en vrac (1) entre la cuve de réacteur (5) et le récipient de déversement (6) et vice versa, la pression dans les deux récipients (5 ; 6) doit être égalisée.

4. Procédé selon une des revendications 1 à 3 est **caractérisé en ce que** l'hydrogène produite est transférée du récipient de déversement (6) dans un récipient de détente (7).

5. Procédé selon une des revendications 1 à 4 est **caractérisé en ce que** les matières en vrac (1) circulent sous forme de lots subdivisées dans le circuit.

6. Procédé selon une des revendications 1 à 5 est **caractérisé en ce que** les matières en vrac (1) sont fluidisées et stabilisées dans la cuve de réacteur et/ou dans le récipient de déversement (5 respectivement 6) au moyen de champs magnétiques extérieurs.

7. Procédé selon la revendication 6 est **caractérisé en ce que** les matières en vrac (1) sont agitées dans la cuve de réacteur et/ou dans le récipient de déversement (5 ou 6) au moyen de champs magnétiques extérieurs.

8. Procédé selon une des revendications 1 à 7 est **caractérisé en ce que** les matières en vrac déversées (1), pendant leur transfert du récipient de déversement (6) à la cuve de réacteur (5), sont stockées dans une ou plusieurs unités de stockage intermédiaires (8).

9. Emploi des matières en vrac dans une installation appropriée à réaliser le procédé selon les revendications 1 à 8, l'installation comprenant une ligne de transport à verrouiller (9) pour le transfert des matières en vrac, étant entourée d'aimants de transfert (10) disposés dans un ordre défini, afin de produire un champs magnétique mobile, est **caractérisé en ce que** sur une partie de la surface extérieure de la matière en vrac (1) au noyau ferromagnétique (2) est disposée une couche d'hydride métallique (3) poreuse ouverte destinée à stocker l'hydrogène et sur une autre partie un catalyseur (4) placé de manière dégagée.
